# EUROPÄISCHE PATENTSCHRIFT

(11) **EP 0 832 714 B1**
(45) Veröffentlichungstag und Bekanntmachung des Hinweises auf die Patenterteilung: **28.11.2001**
(21) Anmeldenummer: 97116202.9
(22) Anmeldetag: 18.09.1997
(51) Int. Cl.: B23Q 11/00

(54) **Pumpstation für Späne enthaltende Kühl- und Schmiermittel**
Pump station for coolants and lubricants containing chips
Station de pompage pour lubrifiants et réfrigérants contenant des copeaux

(30) Priorität: 27.09.1996 DE 29616893 U
(43) Veröffentlichungstag der Anmeldung: 01.04.1998
(73) Patentinhaber: FILTERWERK MANN+HUMMEL GMBH, 71638 Ludwigsburg (DE)
(72) Erfinder: Wilden, Stefan, Dipl.-Ing., 52152 Simmerath (DE); Janssen, Mark,, 3582 Beringen (BE); Fachinger, Alfons, 65474 Bischofsheim (DE)
(74) Vertreter: Bauer, Dirk, Dipl.-Ing. Dipl.-Kfm.

(56) Entgegenhaltungen:
- EP-A- 0 518 095
- DE-U- 29 510 514
- US-A- 4 377 259

## Beschreibung

Die Erfindung betrifft eine Pumpstation für Späne enthaltende Kühl- und Schmierstoffe mit mindestens einer Zuführleitung. Diese mündet in einen Sammelbehälter, dem mindestens eine Pumpe zugeordnet ist. Die Druckseite der Pumpe steht mit einer Abführleitung in Verbindung. Dabei weist die Zuführleitung zusätzlich zu einem mit Gefälle in den Sammelbehälter mündenden Leitungszweig für die Kühl- und Schmierstoffe einen nach einer Steigung oberhalb des Sammelbehälters mündenden Leitungszweig für die Späne auf. Außerdem sind die Mündungen der Leitungszweige so zueinander angeordnet, daß der in den Sammelbehälter fallende Spänestrom auf den in den Sammelbehälter fließenden Kühl- und Schmiermittelstrom trifft.

Derartige, allgemein bekannte Pumpstationen dienen dazu, bei der späneabhebenden Bearbeitung von Werkstücken anfallende Späne zusammen mit Kühl- und Schmierstoffen von den Bearbeitungsmaschinen, beispielsweise über Rohrleitungen, abzuführen, so daß anderenorts eine Trennung der Kühl- und Schmierstoffe von den Spänen erfolgen kann.

Eine Pumpstation der eingangs beschriebenen Art ist beispielsweise aus der EP 0 518 095 A1 bekannt. Durch die über zwei Leitungszweige getrennte Zuführung der Kühl- und Schmierstoffe einerseits und der Späne andererseits läßt sich zunächst jeder Leitungszweig optimal dem zu transportierenden Gut anpassen. So genügt für den die Kühl- und Schmierstoffe transportierenden Leitungszweig ein geringes Gefälle in Richtung des Sammelbehälters, das sich über den Behälterboden bis zur Pumpensaugseite fortsetzt. Um die Späne durch den dafür vorgesehenen ansteigenden und oberhalb des Sammelbehälters mündenden Leitungszweig zu transportieren, kann eine konventionell ausgebildete Kratzfördereinrichtung eingesetzt werden. Deren Kratzer sind mit den bei der vorbekannten Einrichtung eingesetzten rotierenden Räumarmen deshalb nicht vergleichbar, weil die linear bewegten Kratzer bei jedem Umlauf am Ende des unteren Vorlauftrums vom Boden der Förderstrecke gänzlich abgehoben werden und spätestens dort eingeklemmte Späne freigeben. Bei rotierenden Räumarmen werden dagegen eingeklemmte Späne unter Umständen über zahlreiche Umdrehungen festgehalten und tragen zu einem schnellen Verschleiß des Behälterbodens erheblich bei.

Ein Vorteil einer derartigen Pumpstation ergibt sich aus der Anordnung der Mündung der Leitungszweige. Dadurch, daß der in den Sammelbehälter fallende Spänestrom auf den in den Sammelbehälter fließenden Kühl- und Schmiermittelstrom trifft, werden die Späne im freien Fall vom Kühl- und Schmierstoff in dessen Fließrichtung mitgerissen. Der Reibungswiderstand zwischen den Spänen und dem Sammelbehälterboden wird auf diese Weise insgesamt minimiert.

Ein Nachteil dieser bekannten Pumpstation ist darin zu sehen, daß die Auslegung der aus dem Sumpf des Auffangbehälters ansaugenden Pumpe schwierig ist, da die Schwankungsbreite zwischen dem minimalen und dem maximalen Volumenstrom groß ist.

Aus der EP 0 518 095 ist bereits eine Pumpstation bekannt, bei der zerkleinerte Späne durch die Strömung der Kühl- und Schmierstoffe einem Auffangbehälter zugeleitet werden, dessen Boden eine geringe Neigung aufweist. Die Mischung aus Kühl- und Schmierstoffen sowie Spänen wird auf diese Weise in den tiefsten Behälterbodenbereich befördert, dem eine Pumpe zugeordnet ist.

Um die Späne auch bei einem relativ geringen Anteil an Kühl- und Schmierstoffen sicher in den Saugbereich der Pumpe gelangen zu lassen, ist es auch bekannt, einen trichterförmigen Sammelbehälter mit steilen Wänden zu benutzen, so daß die Späne infolge Schwerkraft in den tief im Behälterinneren mündenden Saugbereich der Pumpe gelangen.

Bei den zuvor erwähnten bekannten Pumpstationen wird es als nachteilig angesehen, daß entweder der Spänetransport nur bei geringen Zulaufvolumenströmen funktioniert oder aber die Behälter eine zu große Bauhöhe aufweisen. Zur Verringerung der Bauhöhe war es bisher üblich, die Pumpstationen in den Boden einzulassen, was jedoch inzwischen wegen Grundwasserschutzbestimmungen doppelwandige, im Fundament verankerte Behälter erfordert.

Um zu einer Pumpstation zu gelangen, die nicht unter Flur angeordnet werden muß und trotzdem einen optimalen Abtransport der Späne mittels einer Pumpe gewährleistet, ist es aus der DE 295 105 14 U1 bekannt, einen Sammelbehälter als zylindrischen Topf mit einem im wesentlichen ebenen Behälterboden auszubilden und einen über den Behälterboden laufenden Räumer vorzusehen, der die auf dem Behälterboden abgelagerten Späne zu der Transportpumpe führt.

Bei dieser bekannten Einrichtung werden die Späne von dem mit einem Antrieb in Drehung versetzten Räumer zwangsweise bis unter die Saugöffnung der Pumpe befördert. Um die Späne zu erfassen und der Pumpe zuzuführen, liegt der Räumer mit Räumarmen auf dem Behälterboden auf. Es können aber trotzdem Späne zwischen die Behälterbodenoberseite und die Räumarmunterseite gelangen, so daß die Räumarme mit dem Behälterboden verklemmen. Um dem entgegenzuwirken, sind bei der bekannten Einrichtung zusätzliche Mittel vorgesehen, die ein Anheben des Räumers bzw. ein Abheben der Räumarme von dem Behälterboden ermöglichen sollen.

Durch den Räumer und dessen Antrieb sowie insbesondere durch die zusätzlich noch erforderlichen Vorkehrungen, welche ein Verklemmen des Räumers verhindern sollen, ist die bekannte Einrichtung nicht nur aufwendig in der Herstellung, sondern auch störanfällig in der Betriebsweise.

Der Erfindung liegt die Aufgabe zugrunde, eine Pumpstation der eingangs beschriebenen Art so auszubilden, daß unabhängig von dem gerade zu pumpenden Volumenstrom der Späne enthaltenden Flüssigkeit eine sichere Ansaugung der Flüssigkeit gewährleistet ist.

Ausgehend von einer Pumpstation der im Oberbegriff des Schutzanspruchs 1 genannten Art, wird diese Aufgabe erfindungsgemäß durch die im Anspruch 1 angegebenen Merkmale gelöst.

Durch die erfindungsgemäße Anordnung der saugseitigen Öffnungen ist es z.B. möglich, die mit ihrer Saugseite tiefer liegende Pumpe so zu plazieren, daß ihre Saugseite sich in einem im Querschnitt kleinen, tiefsten Bereich des Sammelbehälters befindet, während die Saugseite der höher liegenden Pumpe beispielsweise (auch seitlich) so versetzt angeordnet sein kann, daß sich der Querschnitt des Sammelbehälters erweitern kann. Eine derartige Erweiterung des Querschnitts von unten nach oben ist vorteilhaft, da dann aufgrund der Querschnittsverengung in entgegengesetzter Richtung ein sicherer Spänetransport in den Saugbereich der unteren Pumpe erfolgt, auch wenn lediglich ein sehr kleiner Volumenstrom vorliegt.

Die Pumpen sind vorzugsweise so geschaltet, daß die mit ihrer Saugseite tiefer liegende Pumpe für eine Leistung ausgelegt ist, die dem minimalen Volumenstrom an Späne enthaltenden Kühl- und Schmierstoffen entspricht. Vergrößert sich der Volumenstrom und steigt der Inhalt im Sammelbehälter über ein bestimmtes Normalniveau an, läßt sich automatisch die zweite, mit ihrer Saugseite höher angeordnete Pumpe sicherheitshalber so lange zuschalten, bis sich das Normalniveau wieder eingestellt hat.

Nach einer Ausgestaltung der Erfindung ist der die Späne zuführende Leitungszweig mit einer Kratzfördereinrichtung ausgestattet, mit der die Späne einem Beschickungstrichter eines oberhalb des Sammelbehälters angeordneten Spänebrechers zuführbar sind.

Durch den Niveauunterschied der Mündungen beider Leitungszweige läßt sich unterhalb der Mündung des die Späne zuführenden Leitungszweiges ein Spänebrecher anordnen, dessen Auslaßöffnung noch oberhalb des Kühl- und Schmiermittelstromes mündet.

Vorzugsweise mündet die Auslaßöffnung des Spänebrechers oberhalb eines in Pumpenrichtung geneigten Bodenteils des Sammelbehälters, wobei der die Kühl- und Schmierstoffe zuführende Leitungszweig mit seiner Sohle in diesen Bodenteil übergeht.

Um bei einem ungünstigen Verhältnis zwischen dem Spänevolumenstrom und dem Kühl- und Schmierstoffvolumenstrom gleichwohl eine sichere Zuführung der Späne zur Pumpstation zu gewährleisten, sieht eine weitere Ausgestaltung der Erfindung vor, daß im Übergangsbereich zwischen der Mündung des Kühl- und Schmierstoffe zuführenden Leitungszweiges und dem sich anschließenden Bodenteil eine mit gereinigten Kühl- und Schmierstoffen beaufschlagbare Spülleitung mündet.

Die Mündung der Spülleitung kann mit einem Ventil ausgestattet sein, mit dem sich der im Kreislauf geführte Kühl- und Schmierstoffvolumenstrom je nach Bedarf zwischen Null und einem Maximum regulieren läßt.

Nach einer weiteren Ausgestaltung der Erfindung sind mindestens alle außerhalb des Bereichs der Pumpensaugseite angeordneten Bodenteile zu einem einen Behältersumpf definierenden horizontalen Bodenteil geneigt ausgerichtet.

Die Neigung der Bodenteile des Sammelbehälters in Richtung auf den Behältersumpf kann so gering ausgeprägt sein, daß eine Überfluranordnung der Pumpstation bei insgesamt geringer Bauhöhe möglich ist und die Behälterbodenausbildung gleichwohl gewährleistet, daß sämtliche, dem Sammelbehälter zugeleitete Bestandteile in den Saugbereich der Pumpe gelangen.

In der Zeichnung ist ein Ausführungsbeispiel einer erfindungsgemäßen Pumpstation dargestellt, Es zeigt:

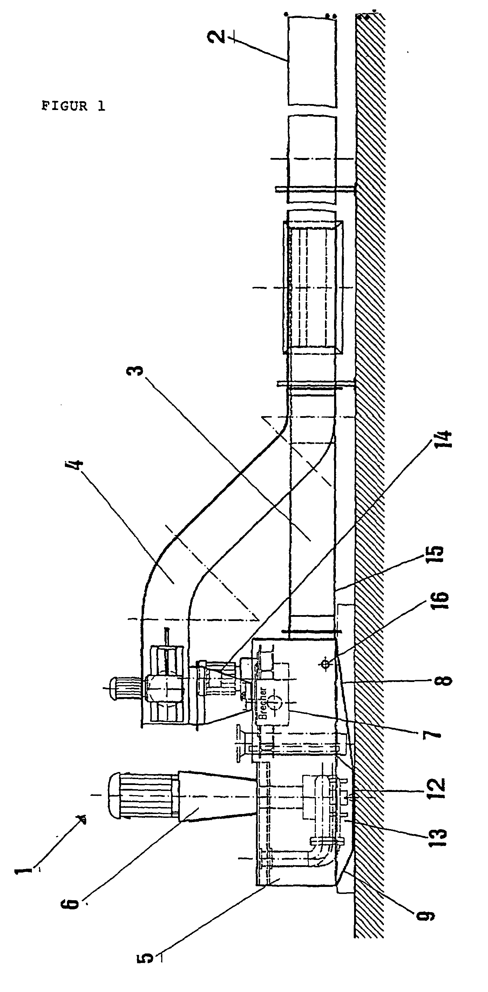

- Figur 1: eine Längsseitenansicht

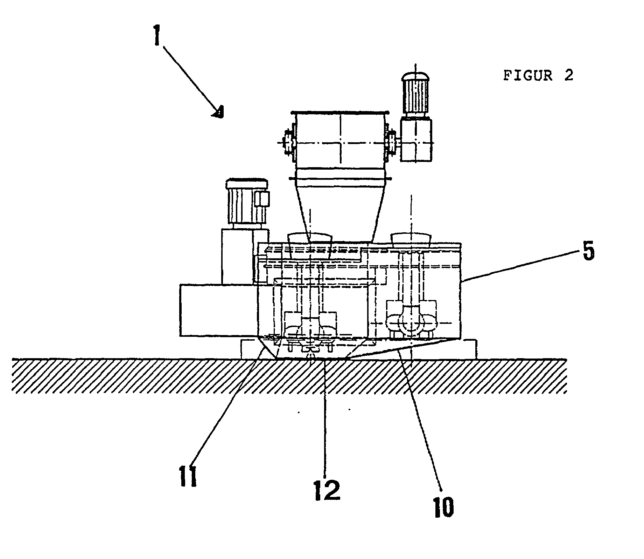

- Figur 2: eine Querseitenansicht

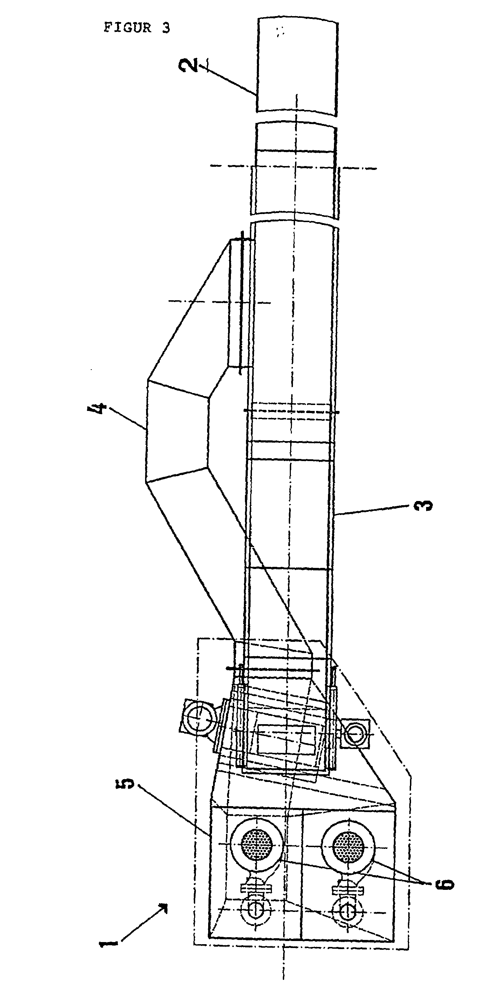

- Figur 3: einen Grundriß

Von einer nicht dargestellten Transferstraße für eine spanabhebende Bearbeitung geht eine Späne sowie Kühl- und Schmierstoffe zu einer Pumpstation 1 transportierende Zuführleitung 2 aus.

In einem Abstand vor der Pumpstation 1 ist an die Zuführleitung 2 koaxial ein Leitungszweig 3 angeschlossen, der wie die Zuführleitung 2 mit geringem Gefälle verläuft. Des weiteren ist an die Zuführleitung 2 gleichfalls in einem Abstand vor der Pumpstation 1 ein Leitungszweig 4 angeschlossen, der in Richtung der Pumpstation 1 ansteigt. Während über den Leitungszweig 3 Kühl- und Schmierstoffe der Pumpstation 1 aufgrund eines natürlichen Gefälles zufließen, werden über den Leitungszweig 4 zum Beispiel mittels eines konventionellen Kratzförderers Späne der Pumpstation 1 zugeführt.

Die Pumpstation 1 umfaßt im wesentlichen einen Sammelbehälter 5, zwei Pumpen 6 und einen Spänebrecher 7.

Der Sammelbehälter 5 ist mit einem Boden aus unterschiedlich geneigt ausgerichteten Bodenteilen 8, 9, 10 und 11 sowie mit einem horizontalen Bodenbereich 12 versehen. Vom horizontalen Bodenbereich 12 aus steigen die übrigen Bodenteile 8, 9, 10 und 11 leicht an und ermöglichen so die Bildung eines Behältersumpfes 13.

In den Behältersumpf 13 tauchen die auf unterschiedlichem Niveau plazierten Saugseiten der Pumpen 6, von denen in Abhängigkeit der Höhe des Niveaus im Sammelbehälter 5 nur eine oder aber beide eingeschaltet ist bzw. sind.

Der Spänebrecher 7 wird über einen Beschickungstrichter 14 beaufschlagt, der unter einer Austrittsöffnung des Leitungszweiges 4 angeordnet ist. Die Austrittsöffnung des Spänebrechers 7 befindet sich über dem in Richtung der Pumpen 6 geneigten Bodenteil 8.

Der Kühl- und Schmiermittel führende Leitungszweig 3 geht mit seiner Sohle 15 in das Bodenteil 8 über. Aus dem Spänebrecher 7 austretende, zerkleinerte Späne treffen somit auf den Strom der über den Bodenteil 8 fließenden Kühl- und Schmierstoffe. Letztere reißen kontinuierlich die zerkleinerten Späne mit, so daß eine Späneanhäufung auf dem Bodenteil 8 vermieden wird.

Sollte ausnahmsweise das Verhältnis zwischen Spänevolumenstrom einerseits und Kühl- und Schmierstoffvolumenstrom andererseits so ungünstig sein, daß der Spüleffekt der Kühl- und Schmierstoffe nicht ausreicht, eine Späneanhäufung außerhalb des Behältersumpfes 13 zu verhindern, ist höchst vorsorglich eine Spülleitung 16 im oberen Bereich des Bodenteils 8 vorgesehen, die mit einem Teilstrom bereits gereinigter Kühl- und Schmierstoffe beaufschlagbar ist und über eine oder mehrere Austrittsdüsen jeweils einen Förderstrahl auf etwaige Spananhäufungen richtet, so daß diese zwangsläufig in den Behältersumpfgespült werden.

## Patentansprüche

1. Pumpstation für Späne enthaltende Kühl- und Schmierstoffe mit mindestens einer Zuführleitung, die in einen Sammelbehälter mündet, dem mindestens eine Pumpe zugeordnet ist, deren Druckseite mit einer Abführleitung in Verbindung steht, wobei die Zuführleitung (2) zusätzlich zu einem mit Gefälle in den Sammelbehälter (5) mündenden Leitungszweig (3) für die Kühl- und Schmierstoffe einen nach einer Steigung oberhalb des Sammelbehälters (5) mündenden Leitungszweig (4) für die Späne aufweist und die Mündungen der Leitungszweige (3, 4) so zueinander angeordnet sind, daß der in den Sammelbehälter (5) fallende Spänestrom auf den in den Sammelbehälter (5) fließenden Kühl- und Schmierstoffstrom trifft, **dadurch gekennzeichnet, daß** im Sammelbehälter (5) zwei Pumpen (6) angeordnet sind, deren saugseitige Öffnungen auf unterschiedlichem Niveau liegen.

2. Pumpstation nach Anspruch 1, **dadurch gekennzeichnet, daß** der die Späne führende Leitungszweig (4) mit einer Kratzfördereinrichtung ausgestattet ist, mit der die Späne einem Beschickungstrichter (14) eines oberhalb des Sammelbehälters (5) angeordneten Spänebrechers (7) zuführbar sind.

3. Pumpstation nach Anspruch 2, **dadurch gekennzeichnet, daß** eine Auslaßöffnung des Spänebrechers (7) oberhalb eines in Pumpenrichtung geneigten Bodenteils (8) des Sammelbehälters (5) mündet und daß der die Kühl- und Schmierstoffe zuführende Leitungszweig (3) mit seiner Sohle (15) in dieses Bodenteil (8) übergeht.

4. Pumpstation nach einem der Ansprüche 1 bis 3, **dadurch gekennzeichnet, daß** im Übergangsbereich zwischen der Mündung des Kühl- und Schmierstoffe zuführenden Leitungszweiges (3) und dem sich anschließenden Bodenteil (8) eine mit gereinigten Kühl- und Schmierstoffen beaufschlagbare Spülleitung (16) mündet.

5. Pumpstation nach einem der Ansprüche 1 bis 4, **dadurch gekennzeichnet, daß** mindestens alle außerhalb des Bereichs der Pumpensaugseite angeordneten Bodenteile (8, 9, 10, 11) zu einem einen Behältersumpf (13) definierenden Bodenbereich (12) geneigt ausgerichtet sind.

## Claims

1. Pumping station for coolants and lubricants containing chips, having at least one supply line which opens out into a collecting tank to which at least one pump is allocated, the pressure side of which communicates with a discharge line, the supply line (2) having, in addition to a branch conductor (3) for the coolants and lubricants which opens out at a gradient into the collecting tank (5), a branch conductor (4) for the chips which slopes up towards and opens out above the collecting tank (5), and the mouths of the branch conductors (3, 4) are disposed relative to one another in such a way that the stream of chips falling into the collecting tank (5) hits the stream of coolants and lubricants flowing into the collecting tank (5), **characterised in that** disposed in the collecting tank (5) are two pumps (6) the ports on the intake side of which are situated at different levels.

2. Pumping station according to claim 1, **characterised in that** the branch conductor (4) conveying the chips is equipped with a scraper-type conveying device by which the chips can be fed to a charging hopper (14) of a chip breaker (7) disposed above the collecting tank (5).

3. Pumping station according to claim 2, **characterised in that** an outlet port of the chip breaker (7) opens out above a floor section (8) of the collecting tank (5) which slopes in the direction of the pump, and that the branch conductor (3) supplying the coolants and lubricants merges by its bottom (15) into this floor section (8).

4. Pumping station according to any of claims 1 to 3, **characterised in that** opening out in the transition zone between the mouth of the branch conductor (3) supplying coolants and lubricants and the contiguous floor section (8) is a flushing line (16) into which purified coolants and lubricants can be admitted.

5. Pumping station according to any of claims 1 to 4, **characterised in that** at least all the floor sections (8, 9, 10, 11) disposed outside the range of the pump intake side are orientated with a slope towards a floor area (12) defining a tank sump (13).

## Revendications

1. Station de pompage d'agent réfrigérant et lubrifiant contenant des copeaux, comprenant au moins un conduit d'entrée qui débouche dans une cuve collectrice à laquelle est associée au moins une pompe dont le côté refoulement communique avec un conduit de sortie, le conduit (2) d'entrée comportant en plus d'une branche (3) débouchant suivant une déclivité dans la cuve (5) collectrice et destinée à l'agent réfrigérant et lubrifiant, une branche (4) débouchant en pente au-dessus de la cuve (5) collectrice et destinée aux copeaux et les embouchures des branches (3, 4) sont disposées, l'une par rapport à l'autre, de façon que le courant de copeaux tombant dans la cuve (5) collectrice vienne sur le courant d'agent réfrigérant et lubrifiant s'écoulant dans la cuve (5) collectrice, **caractérisée en ce qu'**il est disposé dans la cuve (5) collectrice deux pompes (6) dont les orifices du côté de l'aspiration se trouvent à des niveaux différents.

2. Station de pompage suivant la revendication 1, **caractérisée en ce que** la branche (4), dans laquelle passent les copeaux, est munie d'un dispositif convoyeur à raclette, par lequel les copeaux peuvent être envoyés à une trémie (14) de chargement d'un dispositif (7) de fragmentation des copeaux qui est disposé au-dessus de la cuve (5) collectrice.

3. Station de pompage suivant la revendication 2, **caractérisée en ce qu'**une ouverture de sortie du dispositif (7) de fragmentation de copeaux débouche au-dessus d'une partie (8) de fond de la cuve (5) collectrice, cette partie (8) de fond étant inclinée dans la direction de la pompe et **en ce que** la branche (3), dans laquelle passe l'agent réfrigérant et lubrifiant, se transforme par sa base (15) en cette partie (8) de fond.

4. Station de pompage suivant l'une des revendications 1 à 3, **caractérisée en ce que** dans la région de transition entre l'embouchure de la branche (3), dans laquelle passe l'agent réfrigérant et lubrifiant, et la partie (8) de fond qui s'y raccorde, débouche un conduit (16) de rinçage pouvant être alimenté en agent réfrigérant et lubrifiant épuré.

5. Station de pompage suivant l'une des revendications 1 à 4, **caractérisée en ce qu'**au moins toutes les parties (8, 9, 10, 11) de fond disposées à l'extérieur de la région du côté aspiration de la pompe sont inclinées vers une partie (12) de fond définissant un bassin (13) de cuve.
